# EUROPEAN PATENT APPLICATION

(11) **EP 2 836 024 A1**
(43) Date of publication of application: **11.02.2015**
(21) Application number: 13306131.7
(22) Date of filing: 07.08.2013
(51) Int. Cl.: H04W 48/12

(54) **Mobility techniques**

(71) Applicant: ALCATEL LUCENT, 92100 Boulogne-Billancourt (FR)
(72) Inventor: Wong, Shin Horng, Swindon, Wiltshire SN5 7DJ (GB); Puddle, Nicola, Swindon, Wiltshire SN5 7DJ (GB)
(74) Representative: Coghlan, Judith Elizabeth Kensy

(57) **Abstract**

A method of indicating an operational characteristic of a cell in a neighbour cell list to user equipment in a wireless telecommunications network, a computer program product and a network control node operable to perform that method. The method comprises: associating a position in the neighbour cell list with a cell having a selected operational characteristic; communicating an indication of the position to the user equipment; determining whether any cell in the neighbour cell list has the selected operational characteristic, and, if so, placing the cell in the position in the neighbour cell list associated with the selected operational characteristic. Aspects and embodiments may provide a way to represent a group of one or more cells as different from other neighbour cells by utilising the numerical position of the cell listing in a neighbour cell list. Aspects and embodiments may allow a network to indicate to user equipment whether a neighbour cell included in a Neighbour Cell List (NCL) is a small cell or a macro cell without significantly increasing the information bits required to provide such information to users.

## Description

### FIELD OF THE INVENTION

A method of indicating an operational characteristic of a cell in a neighbour cell list to user equipment in a wireless telecommunications network, a computer program product and a network control node operable to perform that method.

### BACKGROUND

Wireless telecommunications systems are known. In such systems, mobile communication devices (for example, mobile telephones) are operable to communicate with base stations provided by network providers.

In known wireless telecommunications systems, radio coverage is provided to network connectible devices such as mobile telephones, or wireless devices such as iPads or other similar tablets, within areas known as cells. A base station is typically located in each cell to provide radio coverage. Network connectible devices in each cell are typically operable to receive information and data from a base station and to transmit information and data to a base station.

User equipment roam through a wireless communication system. Base stations are provided which support those areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within a geographical area of service. Typically, a different antenna within a base station supports each associated sector. Each base station has multiple antennas.

Traditional base stations provide coverage in relatively large geographical areas and those cells are often referred to as "macro" cells. It is possible to provide a heterogeneous network (HetNet) where smaller sized cells are provided within macro cells. Such smaller sized cells are sometimes referred to as micro cells, metro cells, pico cells or femto cells. One way to establish a small cell is to provide a small cell base station, also known as a low power node, which provides coverage having a relatively limited range within the coverage area of a macro cell.

The transmission power of a small cell base station is relatively low and, as a result, each small cell provides a small coverage area in comparison to that provided by a macro cell and may be used, for example, to provide coverage in a network hot spot or an office or a home.

Small cells are typically provided where communications coverage provided by a macro cell is poor, or where a user wishes to use an alternative communications link provided locally by a small cell base station to communicate with a core network. Small cells can also be provided to increase capacity within a network.

Although the deployment of small cell base stations can provide advantages, unexpected consequences can occur.

Accordingly, it is desired to provide an improved network suited to the inclusion of small cell base stations.

### SUMMARY

A first aspect provides a method of indicating an operational characteristic of a cell in a neighbour cell list to user equipment in a wireless telecommunications network; the method comprising: associating a position in the neighbour cell list with a cell having a selected operational characteristic; communicating an indication of the position to the user equipment; determining whether any cell in the neighbour cell list has the selected operational characteristic, and, if so, placing the cell in said position in the neighbour cell list associated with the selected operational characteristic.

The first aspect recognises that small cells deployed within a macro cell layer may be used to improve capacity of a system. Provision of small cells within a network can result in both gains and losses. Gains may be achieved by offloading traffic from a macro cell to deployed small cells and it can be shown that significant capacity improvement can be achieved by means of a HetNet deployment when compared to that of a homogeneous (macro cell only) network deployment. However, there are also losses or difficulties associated with HetNet network deployments.

One such issue is that the deployment of multiple small cells within a macro cell layer can make dealing with mobility of user equipment a challenge. In particular, the provision of multiple small cells can result in very frequent handover to small cells. Existing techniques designed for operation in a homogeneous network deployment may be unsuited to a network deployment including multiple small cells.

It will be understood that operational parameters which may be appropriate to a homogeneous (macro only) deployment maybe less appropriate in relation to a HetNet deployment. In particular, frequent handovers and reselection between small cells can lead to a high amount of RRC signalling. For example, in the case where two small cells are provided within the coverage area of a macro cell and user equipment moves across a coverage region supported by the small cells 1 and 2, the usefulness of handover or reselection may depend upon the nature of the movement of a user equipment across those coverage regions. In particular, for user equipment moving at high speed, setting cell reselection or handover criteria in accordance with that which might be implemented for a solely macro deployment is likely to be such that a handover or reselection event is triggered, but that such an implementation causes a high level of RRC signalling but offers very little benefit in terms of traffic offloading since the time spent by user equipment in each small cell coverage region would be relatively small. It will be appreciated that it could be beneficial if the user equipment could identify cells as being small cells and therefore use appropriate operational parameters in relation to small cells (for example, implementation of a different measurement report), such that it can avoid reselecting to a small cell when the user equipment is moving across their coverage region at high speed.

Accordingly, the first aspect recognises that appropriate operation of user equipment within a network may be dependent upon the type of base station from which user equipment may receive service and, for example, the nature of the operation of user equipment within a network. In other words, operational parameters of relevance to cell reselection or handover may be useful to user equipment when deciding how to handle movement between cells.

The first aspect recognises that provision to user equipment of a Neighbour Cell List (NCL) is useful in supporting mobility of user equipment within a network. The first aspect recognises that one means by which user equipment receives information about the network in which it is operating is via a Neighbour Cell List (NCL). Such an NCL provides user equipment with an indication of base stations from which it may be able to receive a signal, or with which it may be able to establish a radio connection in a given location within a network. It is typically used by user equipment to identify suitable handover or reselection candidates.

It will be appreciated that one way to indicate to user equipment whether a cell in an NCL is a small cell or a macro cell would be to create a separate NCL for small cells. However, it may also be appreciated that such a solution would increase the amount of information that would need to be broadcast, which may be detrimental to overall operation of a network. Furthermore, creation of a separate NCL may be such that legacy user equipment could not understand such a list and the small cell identification would still be required to be included in an NCL or legacy user equipment to allow legacy user equipment to reselect or hand over to small cells. As a result, simply creating a separate NCL for each cell type may be an unsuitable method to provide appropriate information to user equipment.

It will also be appreciated that a bitmap could be introduced to indicate whether each cell in an NCL is a small cell or a low power node. However, it will be appreciated that such a detailed mapping would require a bitmap approximately equal in size to that of the NCL itself, which would also significantly increase the signalling required within a network.

The first aspect recognises that by pre-associating a position in an NCL with a call having a particular parameter or operational characteristic of relevance to a mobility event, it is possible to inform user equipment of that position and then take steps to order an NCL accordingly. In such a manner, it is possible to load a network control node with processing, namely: identification of a cell, if any, having a selected mobility characteristic or operating parameter, then ordering a NCL appropriately. Furthermore, signalling to user equipment may be substantially static, rather than constantly dynamic, the user equipment, for example, only requiring an indication of an NCL position and associated mobility characteristic to be provided once.

It will be appreciated that whilst the first aspect refers to allocation of a selected position and associated operating parameter, there may be a plurality of positions associated with an associated operating parameter. Furthermore, a plurality of positions may be indicated to user equipment, each having an associated operating parameter.

In one embodiment, the method comprises: associating a set of positions in the neighbour cell list with a cell having a selected operational characteristic; and communicating an indication of the set of positions to user equipment. Accordingly, such aspects and embodiments recognise that by taking steps to essentially divide an NCL into groups, such that those groups can be used to identify different categories of cell type, may offer a means to provide further information to user equipment capable of taking steps in response to that information. User equipment having advanced functionality may be operable to use such indexing to determine a range of cell IDs which correspond to a particular cell type. Legacy user equipment may be unable to understand the index, but are able to treat the NCL without any need to understand any attempt to categorize cell type. That is to say, legacy user equipment is likely to operate to treat all cells listed in the NCL as one cell type and operate largely obliviously in respect of mobility events, in dependence upon whether a neighbour cell is a macro cell or a small cell. According to described aspects and embodiments, there may be no need to introduce an additional NCL specifically for small cells or a detailed, dynamically updated, bitmap to map which cells included in an NCL are low power nodes and which are not.

In one embodiment, the set of positions comprises a plurality of consecutive positions in the neighbour cell list. By introducing a grouped list, the number of information bits which may be included for broadcast in a SIB may be significantly reduced in comparison to the introduction of an additional NCL or detailed mapping arrangement. For example, for an NCL relating to 32 cells, a bitmap consumes 32 bits which an index may only require 5 bits to point to a position in the NCL.

In one embodiment, the indication comprises a neighbour cell list position index. In one embodiment, the indication comprises a start or end position of the plurality of consecutive positions. In some aspects and embodiments, for example, it is possible to define indexes which point to the start or end of each category of cell operational characteristic.

In one embodiment, the operational characteristic of a cell comprises cell type. In one embodiment, the operational characteristic of a cell comprises cell transmit power. In one embodiment, the operational characteristic comprises an indication of a parent-child relationship between a macro cell and a small cell. Accordingly, various parameters which maybe ofrelevance to user equipment making sensible, or appropriate, mobility decisions can be included in information which can be derived from positioning of a cell within a NCL. Armed with that information, user equipment may be able to apply different mobility criteria in dependence upon the operational parameters or characteristics of a cell included in the NCL. It will be appreciated that it may be useful for user equipment to be aware of a transmit power of a base station supporting a cell. In particular, it may be useful to know the transmit power of a small cell; for example, to allow user equipment to become aware of the likely uplink to downlink power imbalance between a macro cell and a particular small cell. Similarly, it may be useful for user equipment to be aware of a parent-child relationship between a macro cell and associated small cells through appropriate structuring of an NCL.

In one embodiment, communicating the indication to user equipment comprises transmission of a broadcast message. An NCL is typically maintained by a network control node (for example, an RNC) and an NCL is provided to user equipment operating within a network via a network access node (for example, a base station) which transmits a System Information Broadcast message (SIB). That SIB transmitted, for example, by a macro base station, may be received by all user equipment operating within the radio coverage region of that macro base station. In one embodiment, the broadcast message comprises a system information block (SIB). In some aspects and embodiments the indexes can be signalled or broadcast via, for example, a SIB message to user equipment.

A second aspect provides a computer program product operable, when executed on a computer, to perform the method of the first aspect.

A third aspect provides a network control node configured to indicate an operational characteristic of a cell in a neighbour cell list to user equipment in a wireless telecommunications network; the network control node comprising: association logic operable to associate a position in the neighbour cell list with a cell having a selected operational characteristic; communication logic operable to communicate an indication of said position to user equipment; determination logic operable to determine whether any cell in the neighbour cell list has the selected operational characteristic, and, if so, placing that cell in the position in the neighbour cell list associated with the selected operational characteristic.

In one embodiment, the association logic is operable to associate a set of positions in the neighbour cell list with a cell having a selected operational characteristic; and the communication logic is operable to transmit an indication of the set of positions to user equipment.

In one embodiment, the set of positions comprises a plurality of consecutive positions in the neighbour cell list.

In one embodiment, the indication comprises a neighbour cell list position index.

In one embodiment, the indication comprises a start or end position of the plurality of consecutive positions.

In one embodiment, the operational characteristic of a cell comprises cell type.

In one embodiment, the operational characteristic of a cell comprises cell transmit power.

In one embodiment, the operational characteristic comprises an indication of a parent-child relationship between a macro cell and a small cell.

In one embodiment, the communication logic is operable to communicate the indication to user equipment by means of instruction of transmission of a broadcast message.

In one embodiment, the broadcast message comprises a system information block (SIB).

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically an example HetNet deployment;
Figure 2 illustrates schematically a Neighbour Cell List in which cell type categories are indicated;
Figure 3 is a schematic indication of a Neighbour Cell List according to an alternative embodiment; and
Figure 4 is a schematic indication of a Neighbour Cell List according to a further embodiment.

### DESCRIPTION OF THE EMBODIMENTS

### Overview

Before discussing the embodiments in any more detail, first an overview will be provided. In aUMTS network architecture, user equipment roam through a wireless telecommunications system. Base stations are provided which support areas of radio coverage. A number of such base stations are provided and are distributed geographically in order to provide a wide area of coverage to user equipment.

When user equipment is within an area served by a base station, communication may be established between the user equipment and the base station using associated radio links. Each base station typically supports a number of sectors within the geographical area of service.

Typically, different antenna within a base station supports each associated sector. Each base station has multiple antennas. It will be appreciated that a large number of user equipment and large number of base stations may be present in a typical communication network. It will also be appreciated that different network architectures may be implemented including, for example, a Long Term Evolution (LTE) network in which the functionality provided by network nodes described above is provided by network nodes which can be named differently but have analogous functionality.

Traditional base stations provide coverage in relatively large geographical areas and those cells are often referred to as macro cells. It is possible to provide a heterogeneous network (HetNet) where smaller sized cells supported by small cell base stations, sometimes referred to as low power nodes, are provided within macro cells supported by macro base stations. Such smaller sized cells are often referred to as micro cells, metro cells, pico cells or femto cells. One way to establish a small cell is to provide a small cell base station that provides coverage having a relatively limited range within the coverage of the macro cell.

The transmission power of a small cell base station is relatively low and therefore each small cell typically provides a small radio service coverage area to user equipment compared to that provided by a macro cell. Typically, a small cell would be used to provide radio coverage in an office or a home.

Such small cells are typically provided where the communications coverage provided by a macro cell is poor, or where a user wishes to use an alternative communications link provided locally by a small cell base station, to communicate with the core network and/or to increase capacity within a network. That is to say, in a heterogeneous network, small cells supported by low power nodes (LPN) can be placed within a macro cell supported by a macro cell base station. Provision of low power nodes within a network may operate to increase the capacity of the network by allowing the offloading of some user equipment and the traffic associated with that user equipment from a macro cell layer to a layer provided by the low power nodes.

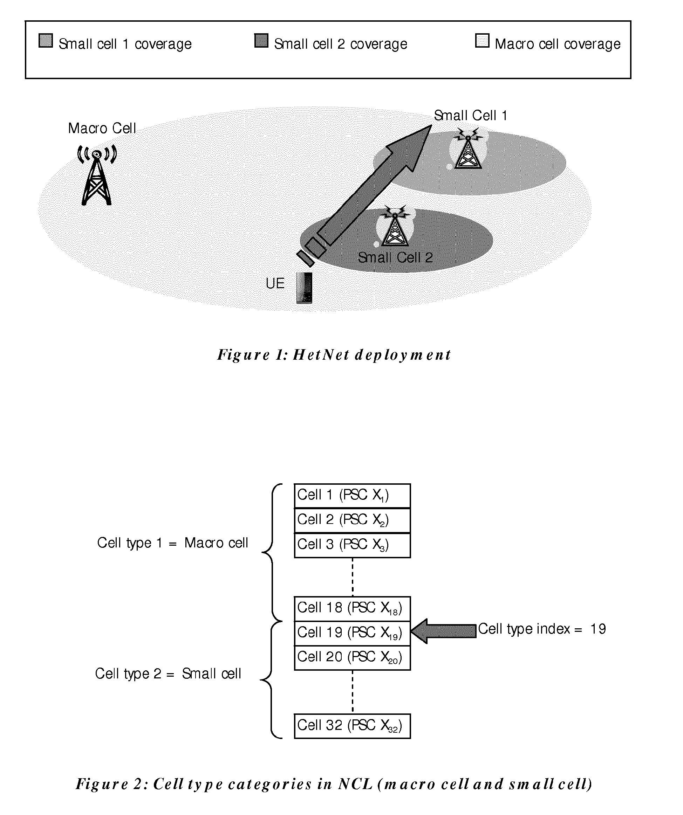

Figure 1 illustrates schematically a network comprising a macro base station and two low power nodes. Each low power node supports a small cell (small cell 1, small cell 2). A macro base station supports a region of radio coverage as a macro cell. User equipment (UE) can freely roam within the regions of radio coverage provided by the macro base station and the two low power nodes. In the example illustrated, the UE is operable to move across the two small cells (small cell 1, small cell 2). In the case of the UE moving at high speed, such movement across cell boundaries may cause a high level of RRC signalling, as the UE may be operable to implement frequent handovers or reselection between cells. That handover or reselection process and associated signalling may offer very little benefit in terms of traffic offloading to the network, since the UE is unlikely to spend much time in each small cell. Aspects and embodiments recognise that it may be beneficial if UE in such a HetNet deployment were operable to identify a cell as a small cell and use, for example, a different measurement report in relation to small cells to avoid reselecting or triggering a handover in such small cells, particularly if the user equipment is moving at high speed.

Aspects and embodiments recognise that user equipment is typically operable to implement cell reselection and handover processes with reference to a Neighbour Cell List (NCL). That NCL provides user equipment with an indication of candidate cells for cell reselection and/ or handover. Typically, that NCL provides no indication of the type of cell and, thus, user equipment do not use the NCL when selecting appropriate handover or cell reselection criteria. Aspects and embodiments recognise that it is possible to use an NCL to provide user equipment with more information regarding discoverable cells. Once provided with that information, user equipment may implement more dynamic or intelligent measurement and reselection criteria to improve overall network operation.

Some aspects and embodiments provide a means to divide or group or cluster a typical NCL in such a manner as to provide an indication of different categories of cell type included in that NCL. In particular, some aspects and embodiments define an index which points to the start or end of each category of cell type. That is to say, the extent of a cluster of a given cell type can be indicated to user equipment. In some embodiments those indexes can be signalled or broadcast (for example, via SIB) to all user equipment operating in a coverage region supported by a macro cell. It will be understood that user equipment having appropriate functionality may use such an index to determine a range of cell identities which correspond to a certain cell type. Furthermore, legacy user equipment operating in a network which provides such indexing functionality will typically be operable to treat a neighbour cell list as if there were no categorization of cell type. That is to say, legacy user equipment would largely be unaffected by provision of such indexing information.

Figure 2 illustrates schematically a typical NCL having 32 entries. According to the illustrated example, there are two types of cell in a HetNet deployment, namely macro cells and small cells. In the example shown, neighbour cells are grouped according to their cell type and, for each group, neighbour cells are placed in the NCL in consecutive entries.

As shown in Figure 2, cells having a primary scrambling code x₁ to x₁₈ are macro cells and are therefore placed in positions 1 to 18 within the illustrated neighbour cell list. Cells having primary scrambling codes x₁₉ to x₃₂ are small cells and they are placed in positions 19 to 32 in the neighbour cell list.

According to one embodiment, an index indicator is used to point to a start position of cells which are small cells. In the illustrated embodiment, the index indicator would have a value of 19. According to embodiments, the network may be operable to broadcast that index indicator. User equipment having appropriate functionality may be operable to read that index and interpret the index accordingly. Legacy user equipment may be unable to make use of that information, but can still use an NCL including both macro cells and small cells.

In essence, according to some aspects and embodiments, a network may be operable to broadcast an NCL as if it were a legacy NCL, but steps are taken by an RNC to arrange cells included in an NCL according to a cell type. Such an ordered NCL can be read by both legacy and non-legacy user equipment. It will be understood that legacy user equipment may be operable to perform measurements and reselection in accordance with legacy methods. For those user equipment having increased functionality, a new index indicator may be read and understood such that those user equipment can distinguish whether a neighbour cell is a macro cell or a small cell.

It will be appreciated that it may be useful for user equipment to be aware of a transmit power of a base station supporting a cell. In particular, it may be useful to know the transmit power of a small cell; for example, to allow user equipment to become aware of the likely uplink to downlink power imbalance between a macro cell and a particular small cell.

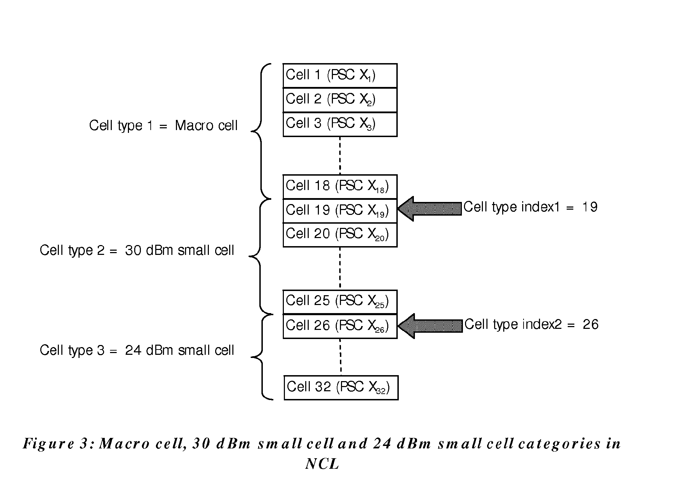

Figure 3 illustrates schematically an NCL in which cell type categories can be indicated to user equipment in an NCL. According to such an embodiment, an NCL may be structured such that a cell category may also include an indication of transmission power of a small cell. In the example shown in Figure 3, an NCL is structured such that it is possible to indicate three types of cell within the network. In the embodiments shown, the NCL can be used to indicate which cells in the NCL are macro cells, which cells are small cells with a 30 dBm transmit power, and which cells in the NCL are small cells with a 24 dBm transmit power. In such an implementation, two indices may be required for transmission to user equipment. In this case, index 1 and index 2 are indicated to user equipment. Index 1 has a value of 19 and index 2 has a value of 26. Those index values can be broadcast by a macro cell after being set by, for example, a network control node such as an RNC. In the example shown, cells with primary scrambling code x₁ to x₁₉ are macro cells and are placed in positions 1 to 18 within the NCL. Cells having primary scrambling code x₁₉ to x₃₂ are small cells. Small cells with 30 dBm transmit power are placed in positions 19 to 25 in the NCL. Cells with primary scrambling code x₂₆ to x₃₂ are small cells with 24 dBm transmit power and are placed in positions 26 to 32 within the NCL. It will be understood that, according to the embodiments shown in Figure 3, user equipment can then determine transmit power of a small cell in addition to being able to distinguish small cells from macro cells. That determination may occur simply as a result of the position of a neighbour cell entry in the NCL.

In some embodiments it is possible to indicate a parent-child relationship between a macro cell and associated small cells through appropriate structuring of an NCL. Such a relationship can be determined where a function known to user equipment can be used with an input such that the position of the macro cell in the NCL is an input to the function.

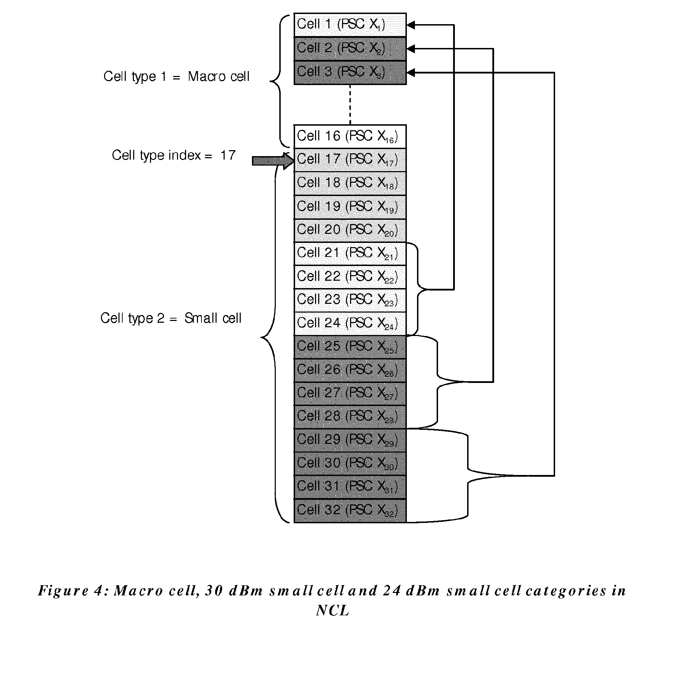

Figure 4 illustrates schematically an NCL in which a parent-child relationship between a macro cell and its small cells can be appropriately indicated. In the illustrated example, if an index value is 17, that may indicate that cells in position 17 to 32 in the NCL are small cells. A serving macro cell may have four of those small cells under its coverage. For the closest neighbouring macro cells, it is possible to include four of their small cells into the NCL. The relationship or function for those cells included in an NCL can therefore be that the first four small cells after the index (for example, cells with primary scrambling code x₁₇ to x₂₀) are occupied by small cells under a serving macro cell's coverage region. The next four small cells included within the NCL after the index can belong to the first neighbour macro cell in the NCL. That is to say, small cells included in positions 21 to 24 within the NCL and having primary scrambling code x₂₁ to x₂₄ may be considered to be under the coverage or exist within the radio coverage of a macro cell with primary scrambling code x₁ which will occupy position 1 in the NCL. Accordingly, the following four small cells included in the NCL can exist within the radio coverage of a macro cell under primary scrambling code x₂ included in position 2 within the NCL. It will be appreciated that given the limited number of entries in a given NCL, small cells belonging to other macro cells may not be included in such an NCL.

Furthermore, it will be noted that other mapping functions may be implemented.

Furthermore, methods according to aspects and embodiments described herein are applicable even in the case where an NCL is extended beyond 32 entries, since all that is required is that for a given NCL index points are provided which indicate to user equipment the start position of a cell-type category.

Aspects and embodiments may allow a network to indicate to user equipment whether a neighbour cell included in a Neighbour Cell List (NCL) is a small cell or a macro cell without significantly increasing the information bits required to provide such information to users. Aspects and embodiments may provide a way to represent a group of one or more cells as different from other neighbour cells by utilising the numerical position of the cell listing in a neighbour cell list.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of indicating an operational characteristic of a cell in a neighbour cell list to user equipment in a wireless telecommunications network; said method comprising:
associating a position in said neighbour cell list with a cell having a selected operational characteristic;
communicating an indication of said position to said user equipment;
determining whether any cell in said neighbour cell list has said selected operational characteristic, and, if so, placing said cell in said position in said neighbour cell list associated with said selected operational characteristic.

2. A method according to claim 1, comprising:
associating a set of positions in said neighbour cell list with a cell having a selected operational characteristic; and
communicating an indication of said set of positions to said user equipment.

3. A method according to claim 2, wherein said set of positions comprises a plurality of consecutive positions in said neighbour cell list.

4. A method according to claim 3, wherein said indication comprises a start or end position of said plurality of consecutive positions.

5. A method according to any preceding claim, wherein said indication comprises a neighbour cell list position index.

6. A method according to any preceding claim, wherein said operational characteristic of a cell comprises cell type.

7. A method according to any preceding claim, wherein said operational characteristic of a cell comprises cell transmit power.

8. A method according to any preceding claim, wherein said operational characteristic comprises an indication of a parent-child relationship between a macro cell and a small cell.

9. A method according to any preceding claim, wherein communicating said indication to said user equipment comprises transmission of a broadcast message.

10. A method according to claim 9, wherein said broadcast message comprises a system information block (SIB).

11. A computer program product operable, when executed on a computer, to perform the method of any one of claims 1 to 10.

12. A network control node configured to indicate an operational characteristic of a cell in a neighbour cell list to user equipment in a wireless telecommunications network; said network control node comprising:
association logic operable to associate a position in said neighbour cell list with a cell having a selected operational characteristic;
communication logic operable to communicate an indication of said position to said user equipment;
determination logic operable to determine whether any cell in said neighbour cell list has said selected operational characteristic, and, if so, placing said cell in said position in said neighbour cell list associated with said selected operational characteristic.
